# EUROPÄISCHE PATENTSCHRIFT

(11) **EP 3 939 797 B1**
(45) Veröffentlichungstag und Bekanntmachung des Hinweises auf die Patenterteilung: **07.02.2024**
(21) Anmeldenummer: 20185815.6
(22) Anmeldetag: 14.07.2020
(51) Int. Cl.: B41J 3/407

(54) **ETIKETTENDRUCKER**
LABEL PRINTER
IMPRIMANTE À ÉTIQUETTES

(43) Veröffentlichungstag der Anmeldung: 19.01.2022
(73) Patentinhaber: Bizerba SE & Co. KG, 72336 Balingen (DE)
(72) Erfinder: Haigis, Jörg, 72336 Balingen (DE); Link, Steffen, 72459 Albstadt (DE)
(74) Vertreter: Manitz Finsterwald Patent- und Rechtsanwaltspartnerschaft mbB

(56) Entgegenhaltungen:
- JP-A- H1 076 712
- US-B1- 6 406 202

## Beschreibung

Die Erfindung betrifft einen Etikettendrucker zum Bedrucken von auf Rolle gewickelten, auf einem Trägerband aufgebrachten oder trägerlosen Endlosband-Etiketten, mit einem Gehäuse, in dem ein Kassettenfach ausgebildet ist, einer Bandkassette zumindest mit einem Abwickeldorn, in der eine Etikettenrolle aufnehmbar ist und die manuell in das Kassettenfach einsetzbar und aus dem Kassettenfach entnehmbar ist, und einem Druckkopf und einer angetriebenen Druckwalze, wobei das Etikettenband, d.h. das Trägerband oder das Endlosband, der Etikettenrolle zwischen dem Druckkopf und der Druckwalze hindurchführbar ist, wobei dem Kassettenfach eine Federeinrichtung und eine bewegbare, mit einer Federkraft der Federeinrichtung in eine Rastposition vorgespannte Rasthalterung für die Bandkassette zugeordnet sind, wobei die Bandkassette beim Einsetzen gegen die Federkraft in die Rasthalterung einrastbar und beim Entnehmen gegen die Federkraft aus der Rasthalterung ausrastbar ist und wobei die Druckwalze Bestandteil der Bandkassette ist.

Ohne Bandkassette muss die Etikettenrolle selbst gehandhabt und auf einen Abwickeldorn in dem Gehäuse aufgesetzt werden und der Etikettenbandanfang muss richtig in den Etikettendrucker eingelegt werden. Bei einem Trägerband muss der Etikettenbandanfang in einen Aufwickeldorn eingefädelt werden. Dies ist bei Verwendung von einfacher handhabbaren Bandkassetten nicht erforderlich, so dass Etikettenrollen einfacher, schneller und problemlos gewechselt werden können. Allerdings ist es erforderlich, dass die Bandkassette in der eingesetzten Position sicher gehalten wird, um eine Fehlfunktion des Etikettendruckers zu vermeiden.

Ein Etikettendrucker mit den Merkmalen des Oberbegriffs des Anspruchs 1 ist aus dem Dokument US 6,406,202 B1 bekannt.

Der Erfindung liegt die Aufgabe zugrunde, einen Etikettendrucker der eingangs genannten Art anzugeben, bei dem die Bandkassette sicher in der eingesetzten Position gehalten und gleichzeitig bedienerfreundlich gewechselt werden kann.

Diese Aufgabe wird durch einen Etikettendrucker mit den Merkmalen des Anspruchs 1 gelöst, und insbesondere dadurch, dass dem Kassettenfach eine Federeinrichtung und eine bewegbare, mit einer Federkraft der Federeinrichtung in eine Rastposition vorgespannte Rasthalterung für die Bandkassette zugeordnet sind, wobei die Bandkassette beim Einsetzen gegen die Federkraft in die Rasthalterung einrastbar und beim Entnehmen gegen die Federkraft aus der Rasthalterung ausrastbar ist.

Der Federkraft der Federeinrichtung muss also sowohl beim Einsetzen als auch beim Entnehmen der Bandkassette überwunden werden. Durch den erfindungsgemäßen Rastmechanismus kann die Bandkassette einerseits sicher in der eingesetzten Position gehalten werden und andererseits trotzdem ohne besonderen Aufwand, lediglich mit jeweils einem Handgriff und damit bedienerfreundlich, in das Kassettenfach eingesetzt und aus dem Kassettenfach entnommen werden. Es ist keine Verriegelung erforderlich, um die Bandkassette in der eingesetzten Position zu halten und die zuvor gelöst werden müsste, bevor die Bandkassette wieder aus der eingesetzten Position entnommen werden kann. Der Bediener muss also keinen Taster, Griff oder dergleichen betätigen, um die Bandkassette entnehmen zu können. Über die gewählte Federhärte der Federeinrichtung ist vorgebbar, welche Kraft der Bediener aufbringen muss, um die Bandkassette ein- und auszurasten.

Insbesondere ist vorgesehen, dass die Bandkassette beim Einsetzen und beim Entnehmen jeweils derart gegen die Rasthalterung drückt, dass die Rasthalterung temporär gegen die Federkraft aus der Rastposition gedrängt wird, um das Ein- und Ausrasten zu erlauben. Die Rasthalterung weicht beim Einsetzen und beim Entnehmen der Bandkassette zunächst jeweils entgegen der Federkraft der Federeinrichtung aus und wird anschließend, sobald die Bandkassette die eingesetzte Position erreicht hat oder ausreichend weit entnommen wurde, wieder in die Rastposition zurückgedrängt.

Die Rasthalterung kann hierzu einen Kontaktabschnitt mit zwei Auflaufschrägen aufweisen, wobei die Bandkassette beim Einsetzen gegen die eine Auflaufschräge und beim Entnehmen gegen die andere Auflaufschräge drückt. Hierdurch kann der Rastmechanismus auf einfache Art realisiert werden. Insbesondere verlaufen die beiden Auflaufschrägen jeweils schräg zu der Richtung einer Bewegung der Rasthalterung aus der Rastposition heraus. Die beiden Auflaufschrägen müssen dabei nicht streng linear verlaufen, d.h. es ist nicht erforderlich, dass die jeweilige Auflaufschräge eine konstante positive bzw. negative Steigung aufweist.

Die beiden Auflaufschrägen können in einer Ebene, die durch die Richtung einer Bewegung der Rasthalterung aus der Rastposition heraus und der Bewegungsrichtung der Bandkassette beim Einsetzen und Entnehmen definiert ist, gemeinsam eine V-Form ausbilden. Die beiden Auflaufschrägen laufen aufeinander zu und bilden gemeinsam eine Spitze des Kontaktabschnitts. Damit ist ein schnelles und definiertes Umschalten zwischen der eingerasteten Position und der ausgerasteten Position der Bandkassette möglich.

Bevorzugt ist die bewegbare Rasthalterung als eine um eine Schwenkachse schwenkbare Rasthalterung, insbesondere als ein schwenkbarer Rastarm, ausgebildet. Grundsätzlich ist es jedoch auch möglich, dass die Rasthalterung linear aus der Rastposition heraus bewegbar ist. Eine Schwenklagerung kann gegenüber einer linearen Führung vergleichsweise einfach realisiert werden. Dabei kann die Federeinrichtung eine Schenkelfeder sein, die die schwenkbare Rasthalterung in die Rastposition vorspannt. Eine Schenkelfeder ist zur Realisierung einer Vorspannung bei einer Schwenklagerung besonders gut geeignet.

Aus Symmetriegründen, um einem Verkanten der Bandkassette entgegenzuwirken, und/oder um eine doppelte Sicherung der Bandkassette in der eingesetzten Position zu erreichen, ist es bevorzugt, wenn in der eingesetzten Position der Bandkassette an zwei einander gegenüberliegenden Seiten der Bandkassette jeweils eine derartige Federeinrichtung und eine derartige Rasthalterung vorgesehen sind. Die beiden Rasthalterungen können starr miteinander gekoppelt oder voneinander unabhängig bewegbar sein.

Die Druckwalze ist Bestandteil der Bandkassette. Die Druckwalze wird damit bei jedem Etikettenrollenwechsel mit der Bandkassette aus dem Gehäuse entnommen. Die Druckwalze kann bei Bedarf aus der entnommenen Bandkassette einfacher ausgetauscht werden als aus dem Gehäuse des Etikettendruckers. Dies ist insbesondere bei einem Wechsel von auf einem Trägerband aufgebrachten Etiketten zu trägerlosen Endlosband-Etiketten oder umgekehrt von Vorteil, da dann in der Regel auch die Druckwalze gewechselt wird, da eine Druckwalze für trägerlose Endlosband-Etiketten üblicherweise aus einem anderen Material besteht als eine Druckwalze für auf einem Trägerband aufgebrachte Etiketten. Dabei ist es bevorzugt, wenn die Druckwalze werkzeuglos austauschbar ist. Dies kann insbesondere dadurch erreicht werden, dass Drehlager der Druckwalze unter Ausbildung eines per Hand lösbaren Presssitzes in entsprechenden Ausnehmungen der Bandkassette aufgenommen sind.

Gemäß der Erfindung ist vorgesehen, dass die Bandkassette mit einem jeweiligen axialen Ende der Achse der Druckwalze in die jeweilige Rasthalterung einrastet und aus der jeweiligen Rasthalterung ausrastet. Hierdurch wird die Druckwalze unmittelbar fixiert und kann in exakt definierter Position relativ zu dem Druckkopf des Etikettendruckers gehalten werden. In einer Ausführungsform, die nicht durch die Patentansprüche abgedeckt ist, ist es jedoch auch denkbar, dass die jeweilige Rasthalterung an anderer Stelle als an dem jeweiligen axialen Ende der Druckwalze angreift. Es können ein oder zwei Rasthalterungen vorgesehen sein.

Vorzugsweise ist an dem Gehäuse ein zwischen einer Geschlossen-Stellung und einer Offen-Stellung um eine Drehachse klappbares Gehäuseelement, insbesondere eine Tür, angebracht, das, insbesondere die, einen Zugriff auf das Kassettenfach zum Einsetzen und Entnehmen der Bandkassette in der Offen-Stellung freigibt und in der Geschlossen-Stellung verhindert. Die Bandkassette kann also nur bei geöffnetem Gehäuseelement eingesetzt bzw. entnommen werden. Der Drucckopf und die Druckwalze befinden sich staubgeschützt im Inneren des Gehäuses.

Bevorzugt ist eine Halteeinrichtung vorgesehen, um das Gehäuseelement in der Geschlossen-Stellung an dem Gehäuse zu halten. Die Halteeinrichtung kann beispielsweise eine Verriegelung aufweisen, die gelöst werden muss, bevor das Gehäuseelement wieder in die Offen-Stellung geklappt werden kann. Bevorzugt ist zum Halten des Gehäuseelements in der Geschlossen-Stellung an dem Gehäuse jedoch lediglich eine Magnethalterung vorgesehen. Das Gehäuseelement kann damit unmittelbar, lediglich unter Überwindung der Magnetkraft der Magnethalterung, in die Offen-Stellung geklappt werden, ohne dass hierfür vorab eine Verriegelung gelöst werden müsste. Ein derartiges Öffnen ist für einen Bediener sehr komfortabel.

Gemäß einer weiteren bevorzugten Ausführungsform der Erfindung ist das Gehäuseelement mit einer Sicherung versehen, die in der Geschlossen-Stellung des Gehäuseelements eine Bewegung der Rasthalterung aus der Rastposition heraus blockiert. Im Betrieb des Etikettendruckers können durch sich drehende Bauteile Kräfte entstehen, die zumindest mit einer Komponente in Richtung einer Bewegung der Bandkassette aus der eingerasteten Position heraus wirken. Dies kann insbesondere dann der Fall sein, wenn der Etikettendrucker mit trägerlosen Endlosband-Etiketten betrieben wird und die Druckwalze Bestandteil der Bandkassette ist. Bei trägerlosen Endlosband-Etiketten, die auch als Linerless-Etiketten bezeichnet werden, wird ein dem Druckkopf und der Druckwalze nachgeschalteter Abschneider benötigt, mit dem das jeweils bedruckte Etikett von dem Endlosband abgetrennt wird. Da das nächste Etikett dabei bereits teilweise durch den Druckbereich zwischen dem Druckkopf und der Druckwalze hindurchgelaufen ist und sofern das Etikett auch in dem bereits durchgelaufenen Teilbereich bedruckt werden soll, wird das Endlosband bis zu dem Etikettenanfang des nächsten Etiketts, an dem das vorhergehende Etikett abgetrennt wurde, zurückgezogen (Reversieren). Hierzu wird die Druckwalze in umgekehrter Drehrichtung betrieben, wodurch die vorgenannten Kräfte entstehen können. Diesen Kräften kann grundsätzlich durch eine Federeinrichtung mit großer Federhärte entgegengewirkt werden. Allerdings werden dann das Einsetzen und das Entnehmen der Bandkassette für den Bediener erschwert und damit unkomfortabel. Mit der Sicherung kann diesen Kräften ebenfalls entgegengewirkt werden, ohne dass hierbei eine besonders gro-ße Federhärte der Federeinrichtung erforderlich ist. Dabei ist es bevorzugt, wenn die Sicherung automatisch durch das bloße Schließen des Gehäuseelements wirksam wird, d.h. die Sicherung muss hierzu nicht separat betätigt werden.

Die Sicherung kann ein an einer Innenseite des Gehäuseelements vorgesehenes, in der Geschlossen-Stellung des Gehäuseelements mit einem freien Ende in Richtung der Rasthalterung vorstehendes Sperrelement aufweisen, das in der Geschlossen-Stellung des Gehäuseelements blockierend auf die Rasthalterung einwirkt. Hierdurch kann die Sicherung auf einfache Art realisiert werden.

Bevorzugt liegt in der Geschlossen-Stellung des Gehäuseelements das Sperrelement unmittelbar, d.h. nicht mittelbar über ein oder mehrere andere kraftübertragende Bauteile, an der Rasthalterung an. Der Aufbau kann dadurch besonders einfach und folglich wenig störanfällig gehalten werden.

Es ist bevorzugt, wenn in der Geschlossen-Stellung des Gehäuseelements eine auf die Rasthalterung in Richtung einer Bewegung aus der Rastposition heraus wirkende Kraft, insbesondere wie sie vorstehend beschrieben, das Sperrelement derart beaufschlagt, dass kein Drehmoment auf das klappbare Gehäuseelement ausgeübt wird. Damit kann sichergestellt werden, dass eine auf die Rasthalterung in Richtung einer Bewegung aus der Rastposition heraus wirkende Kraft vollständig in das Drehlager des Gehäuseelements abgeleitet wird und damit keinesfalls, auch nicht bei hohen Kräften, die beispielsweise bei einer erheblichen Funktionsstörung auftreten könnten, zu einer Öffnungsbewegung des Gehäuseelements führen kann. Insbesondere ist es damit ausreichend, wenn als Halteeinrichtung, um das Gehäuseelement in der Geschlossen-Stellung an dem Gehäuse zu halten, eine Magnethalterung verwendet wird, wobei die Magnethalterung dabei lediglich eine geringe Magnetkraft aufweisen muss, so dass das Gehäuseelement besonders komfortabel bedienbar ist.

Dass kein Drehmoment auf das klappbare Gehäuseelement ausgeübt wird, kann insbesondere dadurch erreicht werden, dass die Richtung der Bewegung der Rasthalterung aus der Rastposition heraus parallel zu der radialen Erstreckung des klappbaren Gehäuseelements in der Geschlossen-Stellung des Gehäuseelements und/oder senkrecht zu dem freien Ende des Sperrelements in der Geschlossen-Stellung des Gehäuseelements orientiert ist.

Vorzugsweise ist das Sperrelement als ein Stanzbiegeteil aus Blech gefertigt. Ein Stanzbiegeteil kann kostengünstig gefertigt und einfach an die Innenseite des Gehäuseelements angeschraubt werden. Damit kann die Sicherung mit einfachen Mittel und ohne hohe Kosten realisiert werden.

Insbesondere ist vorgesehen, dass in der Betriebsstellung des Etikettendruckers die Achse des Abwickeldorns in der Vertikalen verläuft. Hierdurch kann ein flacher Etikettendrucker mit geringer Bauhöhe realisiert werden.

Die vorliegende Erfindung betrifft ferner eine Waage, insbesondere Ladenwaage, mit einem Etikettendrucker, wie er vorstehend erläutert ist.

Weitere vorteilhafte Ausgestaltungen der Erfindung sind in den abhängigen Ansprüchen, der Figurenbeschreibung und der Zeichnung beschrieben.

Die Erfindung wird nachfolgend beispielhaft unter Bezugnahme auf die Zeichnung beschrieben. Es zeigen,
- Fig. 1: eine Waage mit einem erfindungsgemäßen Etikettendrucker in einer perspektivischen Ansicht,
- Fig. 2: den Etikettendrucker aus Fig. 1 mit einem Kassettenfach, ohne Bandkassette und mit einer geöffneten Tür in einer Draufsicht,
- Fig. 3: den Etikettendrucker gemäß Fig. 2, wobei eine Bandkassette teilweise in das Kassettenfach eingeschoben ist,
- Fig. 4: den Etikettendrucker gemäß Fig. 3, wobei die Bandkassette vollständig in das Kassettenfach eingeschoben ist,
- Fig. 5: den Etikettendrucker gemäß Fig. 4, wobei die Tür geschlossen ist, und
- Fig. 6: eine Rasthalterung des Etikettendruckers gemäß den Fig. 2 bis 5 in vergrößerter Einzeldarstellung, und
- Fig. 7: eine Sicherung des Etikettendruckers gemäß den Fig. 2 bis 5 in vergrößerter Einzeldarstellung.

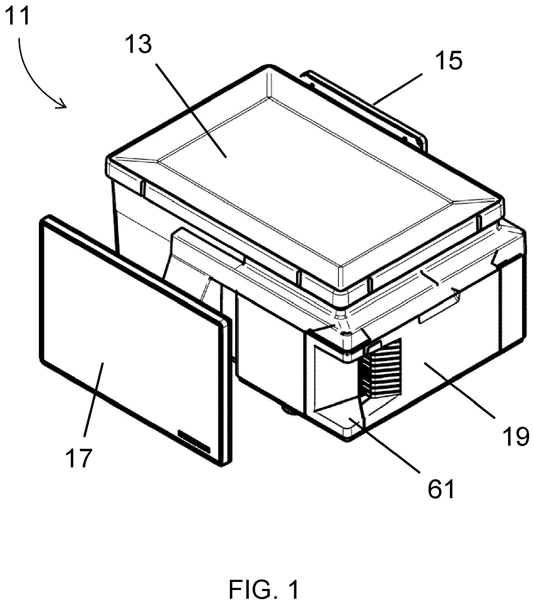

Die in Fig. 1 dargestellte, beispielhafte Waage 11, insbesondere Ladenwaage, umfasst eine Lastplatte 13, welche das Gewicht eines auf ihr liegenden Artikels ermittelt, das sowohl auf einer Anzeige 15 für den Kunden als auch auf einer Anzeige 17 für den Verkäufer angezeigt wird. Die Anzeige 17 ist als Touchscreen ausgebildet, so dass die Waage 11 hierüber auch bedient werden kann. Über den Touchscreen 17 kann eine dem jeweiligen Artikel zugeordnete Identifikationsnummer (PLU) eingegeben werden, so dass unter Hinzunahme des Gewichts ein Preis für den Artikel berechnet werden kann, welcher dann ebenfalls auf den beiden Anzeigen 15, 17 angezeigt wird. Darüber hinaus umfasst die Ladenwaage einen Etikettendrucker 19, um ein Etikett mit dem Gewicht, dem Namen des Artikels und dem berechneten Preis zu bedrucken.

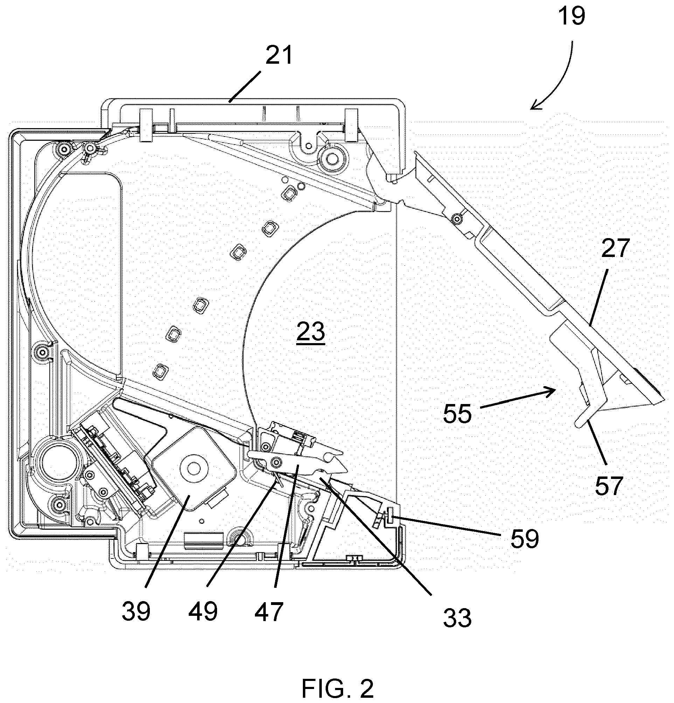

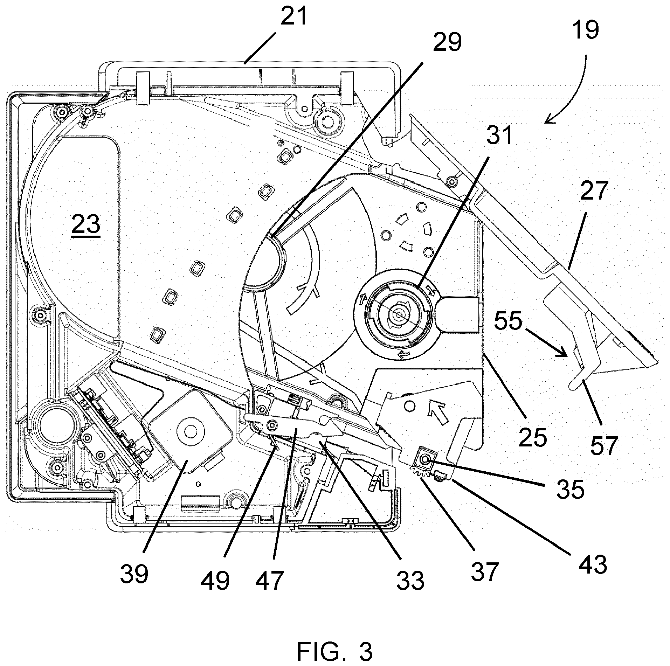

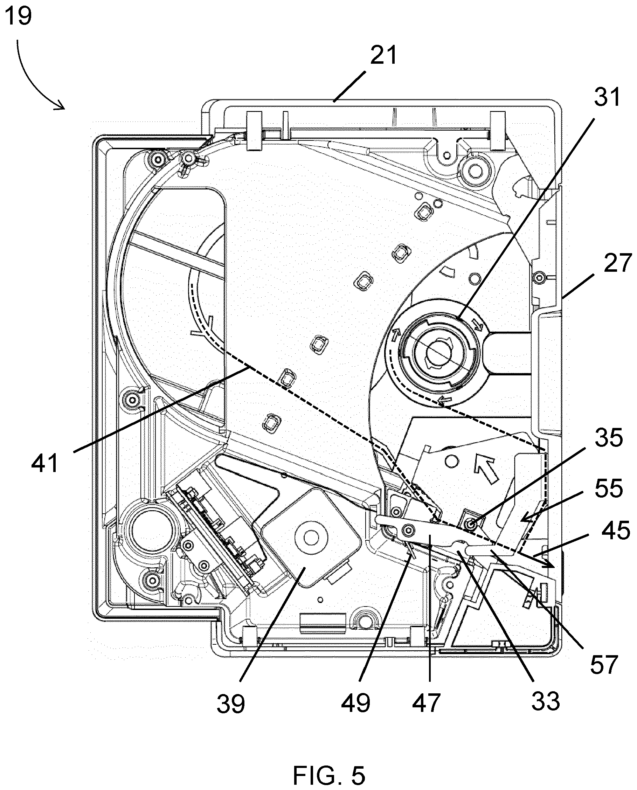

Der Etikettendrucker 19 ist in den Fig. 2 bis 5 jeweils in einer Einzeldarstellung und in einer Draufsicht gezeigt. Der Etikettendrucker 19 umfasst ein Gehäuse 21, in dem ein Kassettenfach 23 ausgebildet ist, in das eine Bandkassette 25 (vgl. die Fig. 3 bis 5) einsetzbar ist. Darüber hinaus ist ein an dem Gehäuse 21 um eine Drehachse klappbar angebrachtes Gehäuseelement 27 in Form einer Tür vorgesehen, das zwischen einer in den Fig. 2 bis 4 dargestellten Offen-Stellung und einer in Fig. 5 dargestellten Geschlossen-Stellung verstellbar ist. In der Offen-Stellung des Gehäuseelements 27 ist der Zugang zu dem Kassettenfach 23 frei, d.h. die Bandkassette 25 kann manuell in das Kassettenfach 23 eingesetzt oder manuell aus dem Kassettenfach 23 entnommen werden. In der Geschlossen-Stellung des Gehäuseelements 27 hingegen ist dies nicht der Fall, da der Zugang dann verschlossen ist.

Der Etikettendrucker 19 kann mit auf einem Trägerband aufgebrachten Etiketten betrieben werden, die auf Rolle gewickelt und somit als Etikettenrolle in der Bandkassette 25 aufgenommen sind. Die Etikettenrolle ist dabei auf einen in der Betriebsstellung des Etikettendruckers 19 vertikal orientierten Abwickeldorn 29 der Bandkassette 25 aufgesetzt, von der das Etikettenband im Betrieb des Etikettendruckers 19 abgewickelt wird. Außerdem weist die Bandkassette 25 einen angetriebenen Aufwickeldorn 31 für das abgewickelte Trägerband auf.

Darüber hinaus sind ein Druckkopf 33 und eine mit dem Druckkopf 33 zusammenwirkende, angetriebene Druckwalze 35 vorgesehen. Der Druckkopf 33 ist in dem Gehäuse 21 angeordnet. Die Druckwalze 35 hingegen ist Bestandteil der Bandkassette 25. Die Druckwalze 35 ist an ihren beiden axialen Enden jeweils in einem separaten Drehlager gelagert, die form- und kraftschlüssig, jedoch lösbar, in entsprechende Ausnehmungen der Bandkassette 25 hineingedrückt sind, so dass die Druckwalze 35 werkzeuglos austauschbar ist.

Die Druckwalze 35 und der Aufwickeldorn 31 werden über ein Zahnradgetriebe, von dem in Fig. 3 ein Zahnrad 37 erkennbar ist, von einem Elektromotor 39 des Etikettendruckers 19 angetrieben. Die Bandkassette 25 besitzt somit keinen eigenen Elektromotor. Das Trägerband 41 mit den Etiketten wird dabei zwischen dem Druckkopf 33 und der Druckwalze 35 hindurchgeführt, um die Etiketten zu bedrucken, wie es in Fig. 5 schematisch angedeutet ist. Nach dem Druckbereich wird das Trägerband 41 um eine Spendekante 43 (vgl. Fig. 3) scharf umgelenkt, so dass sich die Etiketten ablösen und aus dem Etikettendrucker 19 ausgegeben werden können, wie durch einen Pfeil 45 in Fig. 5 veranschaulicht ist.

Alternativ zu einem Betrieb mit einem Trägerband 41 kann der Etikettendrucker 19 auch mit trägerlosen Endlosband-Etiketten, die auch als Linerless-Etiketten bezeichnet werden, betrieben werden. Bei trägerlosen Endlosband-Etiketten ist ein Aufwickeldorn nicht erforderlich. Dafür wird jedoch ein hinter dem Druckkopf 33 und der Druckwalze 35 angeordneter Abschneider benötigt, mit dem die Etiketten von dem Endlosband abgetrennt werden. Ein derartiger Abschneider befindet sich in den Fig. 2 bis 5 dann im Bereich der rechten unteren Ecke des Gehäuses 21 des Etikettendruckers 19, wobei der in Fig. 1 dargestellte Gehäuseeckabschnitt 61 dann gegen einen entsprechenden Gehäuseeckabschnitt mit dem Abschneider ausgetauscht wird.

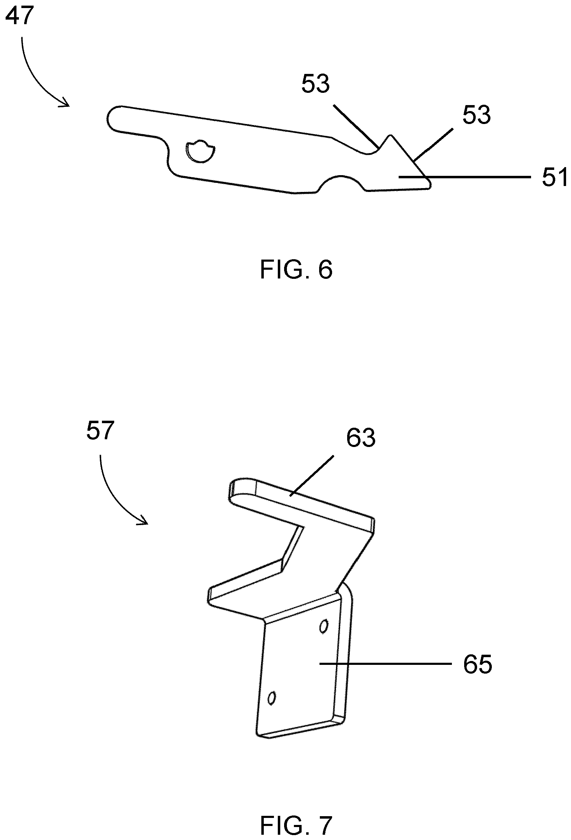

Um die Bandkassette 25 sicher in dem Kassettenfach 23 zu halten, ist ein Rastmechanismus vorgesehen, bei dem die Bandkassette 25 beim Einsetzen gegen eine Federkraft in die eingesetzten Position einrastbar und beim Entnehmen gegen die Federkraft aus der eingesetzten Position ausrastbar ist. Hierzu ist dem Kassettenfach 23 zumindest eine um eine Schwenkachse schwenkbare Rasthalterung 47 in Form eines Rastarms zugeordnet, die von einer zugehörigen Federeinrichtung 49 in Form einer Schenkelfeder in eine Rastposition, in den Fig. 2 bis 5 entgegen dem Uhrzeigersinn, vorgespannt wird. Die Rasthalterung 47 wirkt dabei über einen an dem freien Ende der Rasthalterung 47 vorgesehenen Kontaktabschnitt 51 (vgl. insbesondere Fig. 6) mit einem der beiden axialen Enden der Druckwalze 35 bzw. der Achse der Druckwalze 35 zusammen.

Der mittels der Federeinrichtung 49 in Richtung der Bahn, entlang der die Bandkassette 25 in das Kassettenfach 23 eingesetzt bzw. aus dem Kassettenfach 23 entnommen wird, vorspannte Kontaktabschnitt 51 besitzt zwei Auflaufschrägen 53, die in der Schwenkebene der Rasthalterung 47 V-förmig zusammenlaufen. In den Fig. 2 und 3, d.h. wenn die Bandkassette 25 noch nicht bzw. nur teilweise in das Kassettenfach 23 eingesetzt ist, steht der Kontaktabschnitt 51 mit der durch die beiden Auflaufschrägen 53 gebildeten Spitze in die vorgenannte Bahn vor.

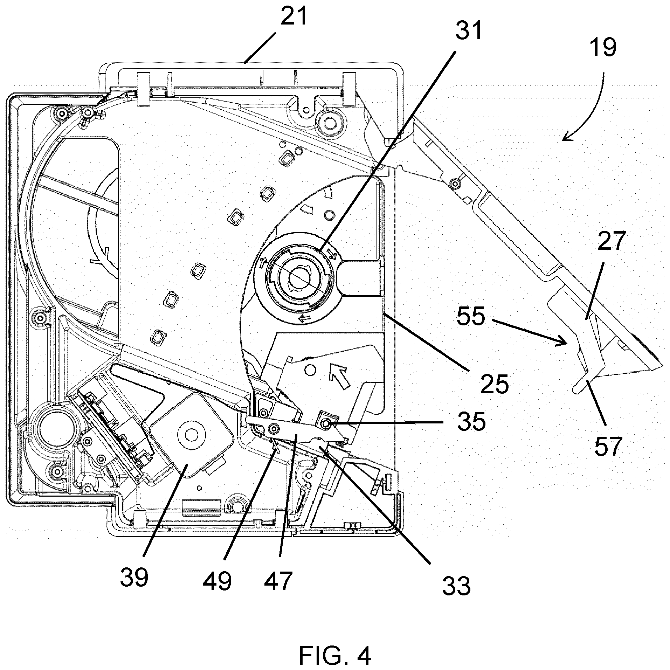

Beim weiteren Einsetzen drückt das axiale Ende der Achse der Druckwalze 35 gegen die in den Fig. 2 bis 5 rechte Auflaufschräge 53 des Kontaktabschnitts 51, so dass die Rasthalterung 47 gegen die Federkraft der Federeinrichtung 49, in den Fig. 2 bis 5 im Uhrzeigersinn, vorübergehend aus der Rastposition herausgedrängt wird. Sobald das axiale Ende der Achse der Druckwalze 35 die Spitze des Kontaktabschnitts 51 passiert hat, wird die Rasthalterung 47 und damit der Kontaktabschnitt 51 wieder in die Rastposition zurückgedrängt und das axiale Ende der Achse der Druckwalze 35 rastet hinter dem Kontaktabschnitt 51 ein (vgl. die Fig. 4 und 5). Das Entnehmen der Bandkassette 25 erfolgt analog in umgekehrter Richtung, wobei dann das axiale Ende der Achse der Druckwalze 35 gegen die in den Fig. 2 bis 5 linke Auflaufschräge 53 des Kontaktabschnitts 51 drückt.

Vorzugsweise greift eine wie vorstehend beschriebene Anordnung mit der Rasthalterung 47 und der Federeinrichtung 49 nicht nur an dem in den Fig. 2 bis 5 sichtbaren axialen Ende der Achse der Druckwalze 35 an, sondern an beiden axialen Enden, d.h. es sind insgesamt zwei derartige Rasthalterungen 47 und zwei derartige Federeinrichtungen 49 vorgesehen. Die beiden Rasthalterungen 47 können starr miteinander gekoppelt oder voneinander unabhängig bewegbar sein.

Ferner ist eine Sicherung 55 vorgesehen, mit der in der Geschlossen-Stellung des Gehäuseelements 27 eine Schwenkbewegung der Rasthalterung 47 aus der Rastposition heraus blockiert werden kann. Die Sicherung 55 umfasst ein Sperrelement 57, das in der Geschlossen-Stellung des Gehäuseelements 27 mit einem freien Ende 63 (vgl. insbesondere Fig. 7) in Richtung der Rasthalterung 47 vorsteht und dabei unmittelbar an der Rasthalterung 27 anliegt, so dass die Rasthalterung 47 nicht mehr aus der Rastposition herausschwenken kann. Das Sperrelement 57 ist als ein Stanzbiegeteil ausgebildet, das über einen Befestigungsabschnitt 65 an der Innenseite des Gehäuseelements 27 angeschraubt ist. Für die zweite Rasthalterung ist keine derartige Sicherung vorgesehen.

Die Sicherung 55 ist deshalb vorteilhaft, da bei Linerless-Etiketten, wenn ein Etikett abgetrennt wird, das nächste Etikett bereist teilweise zwischen dem Druckkopf 33 und der Druckwalze 35 hindurchgelaufen ist, und das Endlosband deshalb bis zu dem Etikettenanfang des nächsten Etiketts zurückgezogen werden muss. Bei diesem sog. Reversieren, bei dem die Druckwalze 35 kurzzeitig nicht in Vorwärtsrichtung, sondern in Rückwärtsrichtung dreht, können Kräfte entstehen, die die eingesetzte Bandkassette 25 in Richtung einer Bewegung in die ausgerastete Position beaufschlagen. Bei kleinen Federhärten der Federeinrichtungen 49, wie es für ein besonders komfortables Einsetzen und Entnehmen der Bandkassette 25 bevorzugt ist, besteht dann die Gefahr, dass die eingesetzte Bandkassette 25 ungewollt und selbsttätig ausrastet. Ein derartiges Ausrasten kann durch die Sicherung 55 verhindert werden. Dadurch, dass die Sicherung 55 an der Innenseite des Gehäuseelements 27 vorgesehen ist, wird die Sicherung 55 automatisch, durch bloßes Schließen des Gehäuseelements 27, wirksam.

Eine im Hinblick auf das Verhindern eines ungewollten Ausrastens besonders sichere Anordnung wird dadurch erreicht, dass durch eine Kraft, die bei eingesetzter Bandkassette 25 und in der Geschlossen-Stellung des Gehäuseelements 27 versucht, die Rasthalterung 47 aus der Rastposition zu drängen, kein Drehmoment auf das klappbare Gehäuseelement 27 ausgeübt wird. Dies wird dadurch gewährleistet, dass in der Geschlossen-Stellung des Gehäuseelements 27 die radiale Erstreckung des Gehäuseelements 27 parallel und das freie Ende 63 des Sperrelements 57 senkrecht zu der Richtung der Bewegung der Rasthalterung 47 aus der Rastposition heraus ausgerichtet ist.

Schließlich ist in dem Gehäuse 21 noch eine Halteeinrichtung 59 für das Gehäuseelement 27 in Form einer Magnethalterung mit einem Magneten vorgesehen, der das freie Ende des zumindest teilweise metallischen Gehäuseelements 27 anzieht und damit das Gehäuseelement 27 in der Geschlossen-Stellung hält. Es ist dabei ausreichend, wenn der Magnet nur ein schwaches Magnetfeld erzeugt, um einem Bediener ein möglichst kraftfreies und damit komfortables Öffnen des Gehäuseelements 27 zu ermöglichen.

### Bezugszeichenliste

- 11: Waage
- 13: Lastplatte
- 15: Kundenanzeige
- 17: Bediener-Touchscreen
- 19: Etikettendrucker
- 21: Gehäuse
- 23: Kassettenfach
- 25: Bandkassette
- 27: Gehäuseelement
- 29: Abwickeldorn
- 31: Aufwickeldorn
- 33: Druckkopf
- 35: Druckwalze
- 37: Zahnrad
- 39: Elektromotor
- 41: Trägerband
- 43: Spendekante
- 45: Pfeil
- 47: Rasthalterung
- 49: Federeinrichtung
- 51: Kontaktabschnitt
- 53: Auflaufschräge
- 55: Sicherung
- 57: Sperrelement
- 59: Halteeinrichtung
- 61: Gehäuseeckabschnitt
- 63: freies Ende
- 65: Befestigungsabschnitt

## Patentansprüche

1. Etikettendrucker zum Bedrucken von auf Rolle gewickelten, auf einem Trägerband (41) aufgebrachten oder trägerlosen Endlosband-Etiketten, mit
einem Gehäuse (21), in dem ein Kassettenfach (23) ausgebildet ist,
einer Bandkassette (25) zumindest mit einem Abwickeldorn (29), in der eine Etikettenrolle aufnehmbar ist und die manuell in das Kassettenfach (23) einsetzbar und aus dem Kassettenfach (23) entnehmbar ist, und
einem Druckkopf (33) und einer angetriebenen Druckwalze (35), wobei das Etikettenband (41) der Etikettenrolle zwischen dem Druckkopf (33) und der Druckwalze (35) hindurchführbar ist,
wobei dem Kassettenfach (23) eine Federeinrichtung (49) und eine bewegbare, mit einer Federkraft der Federeinrichtung (49) in eine Rastposition vorgespannte Rasthalterung (47) für die Bandkassette (25) zugeordnet sind, wobei die Bandkassette (25) beim Einsetzen gegen die Federkraft in die Rasthalterung (47) einrastbar und beim Entnehmen gegen die Federkraft aus der Rasthalterung (47) ausrastbar ist, und
wobei die Druckwalze (35) Bestandteil der Bandkassette (25) ist,
**dadurch gekennzeichnet,**
**dass** die Bandkassette (25) mit einem jeweiligen axialen Ende der Achse der Druckwalze (35) in die jeweilige Rasthalterung (47) einrastet und aus der jeweiligen Rasthalterung (47) ausrastet.

2. Etikettendrucker nach Anspruch 1,
**dadurch gekennzeichnet,**
**dass** die Bandkassette (25) beim Einsetzen und beim Entnehmen jeweils derart gegen die Rasthalterung (47) drückt, dass die Rasthalterung (47) temporär gegen die Federkraft aus der Rastposition gedrängt wird, um das Ein- und Ausrasten zu erlauben.

3. Etikettendrucker nach Anspruch 2,
**dadurch gekennzeichnet,**
**dass** die Rasthalterung (47) einen Kontaktabschnitt (51) mit zwei Auflaufschrägen (53) aufweist, wobei die Bandkassette (25) beim Einsetzen gegen die eine Auflaufschräge (53) und beim Entnehmen gegen die andere Auflaufschräge (53) drückt.

4. Etikettendrucker nach Anspruch 3,
**dadurch gekennzeichnet,**
**dass** die beiden Auflaufschrägen (53) in einer Ebene, die durch die Richtung einer Bewegung der Rasthalterung (47) aus der Rastposition heraus und der Bewegungsrichtung der Bandkassette (25) beim Einsetzen und Entnehmen definiert ist, gemeinsam eine V-Form ausbilden.

5. Etikettendrucker nach einem der vorstehenden Ansprüche,
**dadurch gekennzeichnet,**
**dass** die bewegbare Rasthalterung (47) als eine um eine Schwenkachse schwenkbare Rasthalterung (47), insbesondere als ein schwenkbarer Rastarm, ausgebildet ist,
wobei bevorzugt die Federeinrichtung (49) eine Schenkelfeder ist, die die schwenkbare Rasthalterung (47) in die Rastposition vorspannt.

6. Etikettendrucker nach einem der vorstehenden Ansprüche,
**dadurch gekennzeichnet,**
**dass** in der eingesetzten Position der Bandkassette (25) an zwei einander gegenüberliegenden Seiten der Bandkassette (25) jeweils eine derartige Federeinrichtung (49) und eine derartige Rasthalterung (47) vorgesehen sind.

7. Etikettendrucker nach einem der vorstehenden Ansprüche,
**dadurch gekennzeichnet,**
**dass** die Druckwalze (35) werkzeuglos austauschbar ist.

8. Etikettendrucker nach einem der vorstehenden Ansprüche,
**dadurch gekennzeichnet,**
**dass** an dem Gehäuse (21) ein zwischen einer Geschlossen-Stellung und einer Offen-Stellung um eine Drehachse klappbares Gehäuseelement (27), insbesondere eine Tür, angebracht ist, das einen Zugriff auf das Kassettenfach (23) zum Einsetzen und Entnehmen der Bandkassette (25) in der Offen-Stellung freigibt und in der Geschlossen-Stellung verhindert.

9. Etikettendrucker nach Anspruch 8,
**dadurch gekennzeichnet,**
**dass** eine Halteeinrichtung (59) vorgesehen ist, um das Gehäuseelement (27) in der Geschlossen-Stellung an dem Gehäuse (21) zu halten,
wobei bevorzugt zum Halten des Gehäuseelements (27) in der Geschlossen-Stellung an dem Gehäuse (21) lediglich eine Magnethalterung (59) vorgesehen ist.

10. Etikettendrucker nach Anspruch 8 oder 9,
**dadurch gekennzeichnet,**
**dass** das Gehäuseelement (27) mit einer Sicherung (55) versehen ist, die in der Geschlossen-Stellung des Gehäuseelements (27) eine Bewegung der Rasthalterung (47) aus der Rastposition heraus blockiert,
wobei bevorzugt die Sicherung (55) automatisch durch das bloße Schließen des Gehäuseelements (27) wirksam wird.

11. Etikettendrucker nach Anspruch 10,
**dadurch gekennzeichnet,**
**dass** die Sicherung (55) ein an einer Innenseite des Gehäuseelements (27) vorgesehenes, in der Geschlossen-Stellung des Gehäuseelements (27) mit einem freien Ende (63) in Richtung der Rasthalterung (47) vorstehendes Sperrelement (57) aufweist, das in der Geschlossen-Stellung des Gehäuseelements (27) blockierend auf die Rasthalterung (47) einwirkt.

12. Etikettendrucker nach Anspruch 11,
**dadurch gekennzeichnet,**
**dass** in der Geschlossen-Stellung des Gehäuseelements (27) das Sperrelement (57) unmittelbar an der Rasthalterung (47) anliegt.

13. Etikettendrucker nach Anspruch 11 oder 12,
**dadurch gekennzeichnet,**
**dass** in der Geschlossen-Stellung des Gehäuseelements (27) eine auf die Rasthalterung (47) in Richtung einer Bewegung aus der Rastposition heraus wirkende Kraft das Sperrelement (57) derart beaufschlagt, dass kein Drehmoment auf das klappbare Gehäuseelement (27) ausgeübt wird.

14. Etikettendrucker nach Anspruch 13,
**dadurch gekennzeichnet,**
**dass** die Richtung der Bewegung der Rasthalterung (47) aus der Rastposition heraus parallel zu der radialen Erstreckung des klappbaren Gehäuseelements (27) in der Geschlossen-Stellung des Gehäuseelements (27) und/oder senkrecht zu dem freien Ende (63) des Sperrelements (57) in der Geschlossen-Stellung des Gehäuseelements (27) orientiert ist.

15. Etikettendrucker nach einem der vorstehenden Ansprüche,
**dadurch gekennzeichnet,**
**dass** in der Betriebsstellung des Etikettendruckers (19) die Achse des Abwickeldorns (29) in der Vertikalen verläuft.

16. Waage, insbesondere Ladenwaage, mit einem Etikettendrucker (19) nach einem der vorstehenden Ansprüche.

## Claims

1. A label printer for printing labels wound onto a roll which are applied to a carrier tape (41) or which are linerless endless tape labels, said label printer comprising
a housing (21) in which a cartridge compartment (23) is formed;
a tape cartridge (25) which at least comprises an unwinding mandrel (29), in which a label roll can be received, and which can be manually inserted into the cartridge compartment (23) and removed from the cartridge compartment (23); and
a printhead (33) and a driven print roller (35), wherein the label tape (41) of the label roll can be led between the printhead (33) and the print roller (35),
wherein a spring device (49) and a movable latching holder (47), which is preloaded into a latching position by a spring force of the spring device (49), for the tape cartridge (25) are associated with the cartridge compartment (23), wherein the tape cartridge (25) can be latched into the latching holder (47) against the spring force on the insertion and can be unlatched from the latching holder (47) against the spring force on the removal, and
wherein the print roller (35) is part of the tape cartridge (25),
**characterized in that**
the tape cartridge (25), with a respective axial end of an axle of the print roller (35), latches into the respective latching holder (47) and unlatches from the respective latching holder (47).

2. A label printer according to claim 1,
**characterized in that**,
on the insertion and on the removal, the tape cartridge (25) in each case presses against the latching holder (47) such that the latching holder (47) is temporarily urged out of the latching position against the spring force to allow a latching in and an unlatching.

3. A label printer according to claim 2,
**characterized in that**
the latching holder (47) has a contact section (51) having two run-on slopes (53), with the tape cartridge (25) pressing against the one run-on slope (53) on the insertion and pressing against the other run-on slope (53) on the removal.

4. A label printer according to claim 3,
**characterized in that**
the two run-on slopes (53) together form a V shape in a plane which is defined by the direction of a movement of the latching holder (47) out of the latching position and the direction of movement of the tape cartridge (25) on the insertion and removal.

5. A label printer according to any one of the preceding claims,
**characterized in that**
the movable latching holder (47) is configured as a latching holder (47) pivotable about a pivot axis, in particular as a pivotable latching arm, with preferably the spring device (49) being a torsion spring which preloads the pivotable latching holder (47) into the latching position.

6. A label printer according to any one of the preceding claims,
**characterized in that**,
in the inserted position of the tape cartridge (25), such a spring device (49) and such a latching holder (47) are in each case provided at two mutually oppositely disposed sides of the tape cartridge (25).

7. A label printer according to any one of the preceding claims, **characterized in that**
the print roller (35) is replaceable without tools.

8. A label printer according to any one of the preceding claims,
**characterized in that**
a housing element (27) foldable about an axis of rotation between a closed position and an open position, in particular a door, is attached to the housing (21) and releases access to the cartridge compartment (23) for inserting and removing the tape cartridge (25) in the open position and prevents said access in the closed position.

9. A label printer according to claim 8,
**characterized in that**
a holding device (59) is provided to hold the housing element (27) at the housing (21) in the closed position,
with preferably only a magnetic holder (59) being provided to hold the housing element (27) at the housing (21) in the closed position.

10. A label printer according to claim 8 or 9,
**characterized in that**
the housing element (27) is provided with a securing means (55) which blocks a movement of the latching holder (47) out of the latching position in the closed position of the housing element (27),
with preferably the securing means (55) automatically becoming active due to the mere closing of the housing element (27).

11. A label printer according to claim 10,
**characterized in that**
the securing means (55) has a blocking element (57) which is provided at an inner side of the housing element (27), which projects with a free end (63) in the direction of the latching holder (47) in the closed position of the housing element (27), and which acts in a blocking manner on the latching holder (47) in the closed position of the housing element (27).

12. A label printer according to claim 11,
**characterized in that**
the blocking element (57) directly contacts the latching holder (47) in the closed position of the housing element (27).

13. A label printer according to claim 11 or 12,
**characterized in that**,
in the closed position of the housing element (27), a force acting on the latching holder (47) in the direction of a movement out of the latching position acts on the blocking element (57) such that no torque is exerted onto the foldable housing element (27).

14. A label printer according to claim 13,
**characterized in that**
the direction of the movement of the latching holder (47) out of the latching position is oriented in parallel with the radial extent of the foldable housing element (27) in the closed position of the housing element (27) and/or is oriented perpendicular to the free end (63) of the blocking element (57) in the closed position of the housing element (27).

15. A label printer according to any one of the preceding claims,
**characterized in that**
the axis of the unwinding mandrel (29) runs in the vertical in the operating position of the label printer (19).

16. A scale, in particular a store scale, comprising a label printer (19) according to any one of the preceding claims.

## Revendications

1. Imprimante d'étiquettes pour imprimer des étiquettes, enroulées sur un rouleau, appliquées sur une bande de support (41) ou été des étiquettes en bande sans fin dépourvues de support, comprenant
un boîtier (21) dans lequel est formé un compartiment à cassette (23),
une cassette à bande (25) ayant au moins un mandrin de déroulement (29), laquelle est susceptible de recevoir un rouleau d'étiquettes et d'être insérée manuellement dans le compartiment à cassette (23) et d'être retirée manuellement du compartiment à cassette (23), et
une tête d'impression (33) et un cylindre d'impression entraîné (35), la bande d'étiquettes (41) du rouleau d'étiquettes pouvant être passée entre la tête d'impression (33) et le cylindre d'impression (35),
dans laquelle
un dispositif à ressort (49) et un moyen de retenue par enclenchement (47) mobile, destiné à la cassette à bande (25) et précontraint vers une position d'enclenchement par une force élastique du dispositif à ressort (49), sont associés au compartiment à cassette (23),
lors de l'insertion, la cassette à bande (25) peut être enclenchée dans le moyen de retenue par enclenchement (47) à l'encontre de la force élastique, et lors du retrait, elle peut être désenclenchée du moyen de retenue par enclenchement (47) à l'encontre de la force élastique, et
le cylindre d'impression (35) fait partie intégrante de la cassette à bande (25),
**caractérisée en ce que**
la cassette à bande (25) s'enclenche dans le moyen de retenue par enclenchement (47) respectif et se désenclenche du moyen de retenue par enclenchement (47) respectif, avec une extrémité axiale respective de l'axe du cylindre d'impression (35).

2. Imprimante d'étiquettes selon la revendication 1,
**caractérisée en ce que**
lors de l'insertion et du retrait, la cassette à bande (25) appuie contre le moyen de retenue par enclenchement (47) de telle sorte que le moyen de retenue par enclenchement (47) est poussé temporairement hors de la position d'enclenchement à l'encontre de la force élastique, afin de permettre l'enclenchement et le désenclenchement.

3. Imprimante d'étiquettes selon la revendication 2,
**caractérisée en ce que**
le moyen de retenue par enclenchement (47) présente une portion de contact (51) ayant deux biseaux de montée (53), la cassette à bande (25) appuyant contre l'un des biseaux de montée (53) lors de l'insertion et contre l'autre biseau de montée (53) lors du retrait.

4. Imprimante d'étiquettes selon la revendication 3,
**caractérisée en ce que**
les deux biseaux de montée (53) constituent ensemble une forme en V dans un plan qui est défini par la direction d'un mouvement du moyen de retenue par enclenchement (47) hors de la position d'enclenchement, et par la direction de mouvement de la cassette à bande (25) lors de l'insertion et du retrait.

5. Imprimante d'étiquettes selon l'une des revendications précédentes,
**caractérisée en ce que**
le moyen de retenue par enclenchement (47) mobile est conçu comme un moyen de retenue par enclenchement (47) susceptible de pivoter autour d'un axe de pivotement, en particulier comme un bras d'enclenchement pivotant,
de préférence, le dispositif à ressort (49) étant un ressort à branches qui précontraint le moyen de retenue par enclenchement pivotant (47) vers la position d'enclenchement.

6. Imprimante d'étiquettes selon l'une des revendications précédentes,
**caractérisée en ce que**
dans la position insérée de la cassette à bande (25), un tel dispositif à ressort (49) respectif et un tel moyen de retenue par enclenchement (47) respectif sont prévus sur deux côtés opposés l'un à l'autre de la cassette à bande (25).

7. Imprimante d'étiquettes selon l'une des revendications précédentes, **caractérisée en ce que**
le cylindre d'impression (35) est remplaçable sans outil.

8. Imprimante d'étiquettes selon l'une des revendications précédentes,
**caractérisée en ce que**
sur le boîtier (21) est monté un élément de boîtier (27), en particulier une porte, rabattable autour d'un axe de rotation entre une position fermée et une position ouverte, qui, en position ouverte, libère un accès au compartiment à cassette (23) pour l'insertion et le retrait de la cassette à bande (25), et qui, en position fermée, empêche ledit accès.

9. Imprimante d'étiquettes selon la revendication 8,
**caractérisée en ce que**
il est prévu un dispositif de retenue (59) pour retenir l'élément de boîtier (27) en position fermée sur le boîtier (21),
de préférence, pour retenir l'élément de boîtier (27) en position fermée sur le boîtier (21), il est prévu seulement un moyen de retenue magnétique (59).

10. Imprimante d'étiquettes selon la revendication 8 ou 9,
**caractérisée en ce que**
l'élément de boîtier (27) est pourvu d'un moyen de blocage (55) qui, en position fermée de l'élément de boîtier (27), bloque un mouvement du moyen de retenue par enclenchement (47) hors de la position d'enclenchement, de préférence, le moyen de blocage (55) est activé automatiquement par la simple fermeture de l'élément de boîtier (27).

11. Imprimante d'étiquettes selon la revendication 10,
**caractérisée en ce que**
le moyen de blocage (55) présente un élément d'arrêt (57) prévu sur un côté intérieur de l'élément de boîtier (27), élément d'arrêt qui, en position fermée de l'élément de boîtier (27), fait saillie par une extrémité libre (63) en direction du moyen de retenue par enclenchement (47), et qui, en position fermée de l'élément de boîtier (27), agit sur le moyen de retenue par enclenchement (47) en le bloquant.

12. Imprimante d'étiquettes selon la revendication 11,
**caractérisée en ce que**
en position fermée de l'élément de boîtier (27), l'élément d'arrêt (57) s'applique directement contre le moyen de retenue par enclenchement (47).

13. Imprimante d'étiquettes selon la revendication 11 ou 12,
**caractérisée en ce que**
en position fermée de l'élément de boîtier (27), une force agissant sur le moyen de retenue par enclenchement (47) en direction d'un mouvement hors de la position d'enclenchement sollicite l'élément d'arrêt (57) de telle sorte qu'aucun couple de rotation n'est exercé sur l'élément de boîtier (27) rabattable.

14. Imprimante d'étiquettes selon la revendication 13,
**caractérisée en ce que**
la direction du mouvement du moyen de retenue par enclenchement (47) hors de la position d'enclenchement est orientée parallèlement à l'extension radiale de l'élément de boîtier (27) rabattable, en position fermée de l'élément de boîtier (27), et/ou perpendiculairement à l'extrémité libre (63) de l'élément d'arrêt (57), en position fermée de l'élément de boîtier (27).

15. Imprimante d'étiquettes selon l'une des revendications précédentes,
**caractérisée en ce que**
dans la position de fonctionnement de l'imprimante d'étiquettes (19), l'axe du mandrin de déroulement (29) s'étend à la verticale.

16. Balance, en particulier balance de magasin, comprenant une imprimante d'étiquettes (19) selon l'une des revendications précédentes.
